# EUROPEAN PATENT SPECIFICATION

(11) **EP 2 803 477 B1**
(45) Date of publication and mention of the grant of the patent: **09.03.2016**
(21) Application number: 14167384.8
(22) Date of filing: 07.05.2014
(51) Int. Cl.: B32B 5/02, B32B 15/02, B32B 15/06, B32B 15/08, B32B 15/085, B32B 15/088, B32B 15/09, B32B 15/095, B32B 15/18, B32B 15/20, B23Q 11/08, B32B 3/26

(54) **Protective Device**
Schutzeinrichtung
Dispositif de protection

(30) Priority: 14.05.2013 IT BO20130221
(43) Date of publication of application: 19.11.2014
(73) Proprietor: P.E.I. Protezioni Elaborazioni Industriali S.r.l., 40012 Calderara di Reno (Bologna) (IT)
(72) Inventor: Benedetti, Michele, 40012 CALDERARA DI RENO (BOLOGNA) (IT); Calzolari, Diego, 40012 CALDERARA DI RENO (BOLOGNA) (IT)
(74) Representative: Milli, Simone

(56) References cited:
- EP-A1- 0 607 503
- EP-A1- 1 614 504
- EP-A2- 1 316 600
- WO-A1-91/08070
- DE-A1- 3 515 669
- US-A- 1 937 985

## Description

This invention relates to a protective device, preferably in the form of a rolling cloth.

In the sector of machine tools or, more generally, of process machinery and tools, the need to protect machine operators and mechanical parts from chippings and swarf is felt particularly strongly.

In this connection, protective devices are known which usually comprise polymeric material.

In this sector, various protective devices are known, comprising, in particular sliding plastic elements which can be opened and closed by the user or automatically by machine drives.

As is known, the swarf produced during machining can reach very high temperatures and, over time, its impact against the protective device leads to irreparable damage and may even cause holes to be made in the protective device, with consequent risk to operator safety and/or damage to machine parts.

A need felt very strongly is that for a protective device which is particularly well suited to machine tools and which is capable of guaranteeing very good resistance to impact with objects or particles in motion and at high temperatures (for example, hot swarf).

Document EP0607503 discloses a device for a bellows of a flexible connecting corridor. Such device comprises an elastomeric layer wherein metallic wires are inserted.

Document WO 91/08070 discloses a multilayered flexible protective element for a work zone of a machine tool comprising one fabric, which can be made of metallic fibers, polymeric fibers, or natural fibers.

This invention therefore has for an aim to satisfy the above mentioned need by providing a protective device and a related protection method.

According to the invention, this aim is achieved by a protective device and a protection method comprising the technical features set out in one or more of the annexed claims.

The technical features of the invention, with reference to the above aims, are clearly described in the annexed claims and its advantages are more apparent from the detailed description which follows, with reference to the accompanying drawings which illustrate a preferred, non-limiting embodiment of the invention and in which:
- Figure 1 schematically illustrates a protective element according to the invention;
- Figure 2 shows a cross section view of the protective element according to the invention;
- Figure 3 shows a cross section view of a further embodiment of the protective element of the invention;
- Figure 4 shows a cross section view of a further embodiment of the protective element according to the invention;
- Figure 5 shows a view of an embodiment of the protective device according to the invention;
- Figure 6 shows a view of a further embodiment of the protective device according to the invention;
- Figure 7 shows a cross section view of an embodiment of the protective element of Figure 1.

With reference to the accompanying drawings, the numeral 10 denotes in its entirety a protective device according to the invention. Preferably, the protective device 10 allows protecting a work zone. Still more preferably, the protective device 10 allows protecting a work zone of a machine tool.

More specifically, the protective device 10 is associated with a machine tool.

According to the invention, the protective device 10 comprises a protective element 1 extending mainly in one plane.

It should be noted therefore that the protective element 1 has a sheet-like structure when in the working position, that is when it is substantially laid out flat during operation.

The protective element 1 extending mainly in one plane comprises the following, according to the invention:
- at least one layer (2A, 2B) of polymeric material;
- at least one metallic mesh layer (3A, 3B) defined by a metallic fabric, coupled to (embedded in) the layer of polymeric material (2A, 2B) and extending in one plane to form a protective barrier;
- at least one supporting cloth (4A) coupled to the layer (2A) of polymeric material.

It should be noted that the expression "metallic mesh layer" is used to mean a sheet which is made of metallic material, extends in one plane and defines a plurality of holes or openings in the plane of main extension.

The holes or openings may be of any size.

The expression "element extending mainly in one plane" is used to mean that the element extends mainly in two dimensions (length and width), while the third dimension (thickness) is smaller than the two main dimensions.

Preferably, the metallic mesh layer (3A, 3B), that is, the metallic fabric, is made of steel. Still more preferably, it is made of stainless steel.

In other variant embodiments, the metallic mesh layer (3A, 3B), that is, the metallic fabric, comprises one or more of the following elements or alloys: brass, aluminium, nickel alloys, titanium, alloy steel, copper, chrome.

More in general, the metallic mesh layer (3A, 3B), that is, the metallic fabric, may be made of any metallic material or combination of metallic materials.

The accompanying drawings illustrate different embodiments of the invention purely by way of non-limiting example.

More specifically, the protective element 1 is preferably configured to define a flexible element (that is, an element deformable in the plane of main extension).

It should be noted that according to this aspect, the combination of thickness and materials used to make the different layers (2A, 2B; 3A, 3B) of the protective element 1 is such as to impart flexibility thereto.

It should also be noted that the protective element 1 is configured to define a protective cloth (which is flexible).

Preferably, as illustrated in the accompanying drawings, the metallic mesh layer (3A, 3B) comprises a metallic fabric defining a metallic mesh or net.

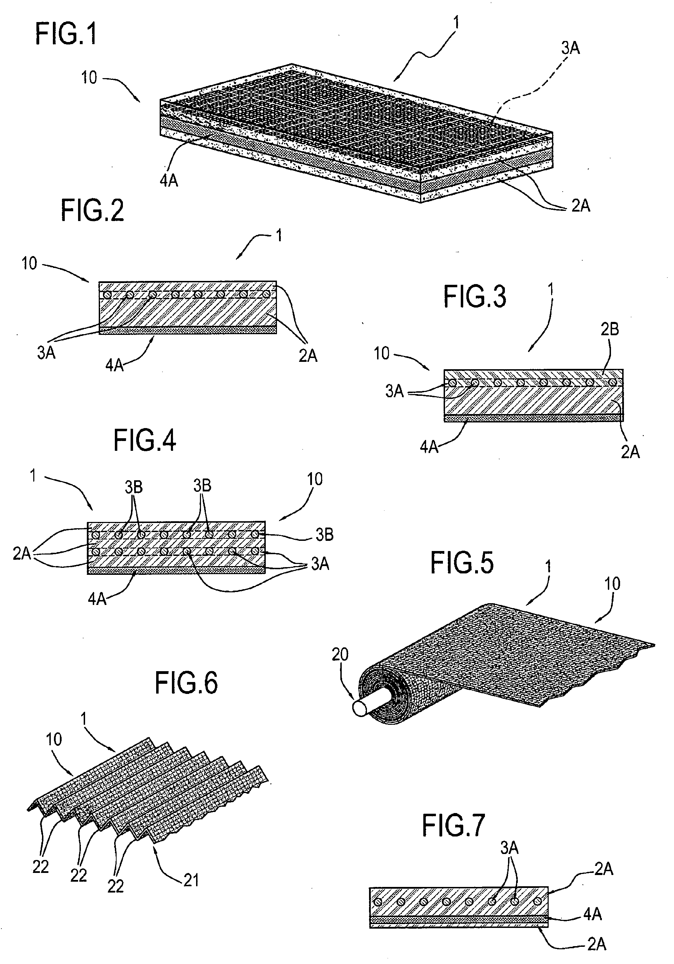

As already stated above, the metallic fabric is embedded in the layer of polymeric material (2A, 2B), as clearly illustrated in Figure 1.

It should be noted that in this case, the holes or openings defined by the metallic layer (3A, 3B) are filled with the polymeric material.

It should be noted, therefore, that according to this aspect, the metallic mesh layer (3A, 3B), that is, the metallic fabric, is located inside the polymeric layer (2A, 2B) and is embedded therein.

More specifically, according to this aspect, the metallic mesh layer (3A, 3B), that is, the metallic fabric, is spread with a layer of polymeric material (2A, 2B) in order to impermeabilize it.

The metallic mesh layer (3A, 3B) comprises a plurality of interwoven metallic threads.

Preferably, but without limiting the invention, the threads are arranged along two perpendicular directions, in such a way as to define a grid.

More in general, it should be noted that in another embodiment, the metallic mesh layer (3A, 3B) comprises a plurality of metallic threads arranged in any suitable manner.

In one embodiment, the metallic threads are arranged relative to each other in such a way as not to be interwoven (for example, parallel).

Figure 4 shows a variant embodiment of the protective element 1.

In this variant embodiment, the protective element 1 comprises a plurality of metallic layers (3A, 3B), that is, metallic fabrics: the drawing shows a first and a second metallic layer, that is, a first and a second metallic fabric.

The metallic layers (3A, 3B) (made of metallic fabrics) are superposed on each other along the thickness of the protective element 1.

More in general, therefore, in this variant embodiment, the protective element 1 comprises a plurality of metallic mesh layers (3A, 3B). More specifically, the embodiment illustrated in Figure 3 comprises a first metallic layer 3A and a second metallic layer 3B.

The structure of the layer of polymeric material (2A, 2B) will now be described.

In a first embodiment, the layer of polymeric material (2A, 2B) comprises a thermoplastic material.

In a second embodiment, the layer of polymeric material (2A, 2B) comprises a thermosetting material.

In a preferred embodiment, the layer of polymeric material (2A, 2B) comprises one or more of the following compounds: polyester, polyamide, aramid fibres, polyethylene.

In yet another embodiment, the protective element 1 comprises a plurality of layers of polymeric material (2A, 2B), as clearly illustrated in Figure 3.

In this embodiment, each layer of polymeric material (2A, 2B) is preferably made of a material different from the material or materials of the adjacent layer or layers.

It should be noted that the layer of polymeric material (2A, 2B) is configured to be transparent so that at least one metallic layer (3A, 3B) is visible through it.

According to this aspect, preferably the layer of polymeric material (2A, 2B) facing the outside (that is, the one facing the outside of the zone to be protected) is transparent.

Further, in a preferred embodiment, the transparent layer of polymeric material (2A, 2B) comprises one or more of the following compounds: polyurethane, silicone, PTFE, ETFE, polyethylene, polyester, neoprene, polychloroprene, natural rubber, nitrile rubber, PVDC, PVDF.

Preferably, the protective element 1 is operatively coupled (connected or fixed) to a roller 20 forming part of the protective device 10 (as illustrate in Figure 5).

It should be noted that in this embodiment, the protective element 1 is coupled to the roller 20 to be wound onto/unwound from the roller 20.

More specifically, in this embodiment, the protective element 1 is unwound from the roller 20 to perform its protective function.

It should be noted that in this embodiment, the protective element 1 is movable between a fully wound limit configuration and a fully unwound limit position.

Preferably, the protective device 10 comprises at least one guide configured to guide the protective element during winding and unwinding onto and from the roller 20.

The device 10 preferably also comprises drive means (for example, motors) for driving the protective element 1, configured to wind/unwind the protective element 1 onto/from the roller (and neither of which is illustrated).

Figure 6 shows a further embodiment of the protective device 10.

It should be noted that, preferably, the protective element 1 is configured to form a bellows 21.

In this regard, the protective element 1 has a plurality of fold lines 22, as illustrated in Figure 6.

It should be noted that the fold lines 22 preferably run parallel to each other.

It should be noted that in this application, the protective element 1 is associated with a pair of movable elements of a machine, in such a way as to allow adjusting the longitudinal extension of the bellows 21 between two end positions, namely, a position where the bellows 21 is fully closed (closed "in a pack") and a position where the bellows 21 is fully extended.

It should be noted that when the bellows 21 is in the fully extended position, it extends mainly in one plane, since its thickness is considerably smaller than the other two dimensions it extends in, namely width and length.

Preferably, the bellows 21 is associated with one or more guides so that it is guided in its movement between the two limit configurations, that is, fully closed and fully extended.

Figure 3 shows a protective element 1 having a pair of layers of polymeric material (2A, 2B).

It should be noted that in this illustrated embodiment, the layer 3A of metallic mesh material, that is, the metallic fabric, is interposed (embedded) between the two layers of polymeric material (2A, 2B).

Described briefly below in order to better clarify the scope of the invention is the use of the protective element 1.

The protective element 1 is particularly suitable for defining a protective device for a machine tool or, more in general, for a work zone.

It should be noted that in the special configuration of the protective element 1, a metallic mesh layer (3A, 3B), that is, a metallic fabric, is associated with a layer of polymeric material (2A, 2B).

Preferably, the metallic mesh layer (3A, 3B), that is, the metallic fabric, is associated with the layer of polymeric material (2A, 2B) by spreading the polymeric material on the metallic mesh layer (3A, 3B). It should be noted, therefore, that the metallic mesh layer (3A, 3B), that is, the metallic fabric, is embedded in the layer of polymeric material (2A, 2B).

Preferably, protective element 1 is made by rolling or calendering. The layer of polymeric material (2A, 2B) is impermeable, so as to form a barrier to any working fluid (for example, liquid refrigerant) used in the work zone.

The layer of polymeric material (2A, 2B) thus allows creating an impermeable barrier protecting the metallic mesh layer (3A, 3B), that is, the metallic fabric, and thereby preventing the selfsame metallic mesh layer (3A, 3B), that is, the metallic fabric, from being contaminated by oils or other substances which may lead to its oxidization, corrosion or, more in general, deterioration.

The metallic mesh layer (3A, 3B), that is, the metallic fabric, on the other hand, constitutes an excellent mechanical barrier capable of resisting impacts with particles moving at high speed (such as, for example, swarf produced during machining).

More specifically, the metallic mesh layer (3A, 3B), that is, the metallic fabric cannot be penetrated by the hot swarf, thus guaranteeing a particularly high level of protection for the machine operator and/or for machine parts or components.

From the foregoing, the advantages of the invention may easily be inferred.

In short, the protective element 1 simultaneously provides impermeability and a high level of mechanical protection.

The protective element 1 is therefore ideal for making protective panels for machine tools and can be associated with any mechanical part or structure (frames, movable panels or doors and so on).

In a variant embodiment not illustrated, the metallic mesh layer (3A, 3B), that is, the metallic fabric, is micro-perforated plate.

According to yet another aspect, the protective element 1 comprises at least one supporting cloth (whose function is to improve the stability and flatness of the protective element 1).

Preferably, the supporting cloth is made of polymeric material. In other words, the supporting cloth is a polymeric fabric.

Still more preferably, the cloth of polymeric material is made from polyester, or polyamide, or kevlar, or a combination of these materials.

It should be noted that the supporting cloth has a structural support function.

In other words, the supporting cloth provides support for the protective element 1.

Preferably, the polymeric fabric comprises single- or double-weave polymeric cloth.

Preferably, the polymeric cloth (polymeric fabric) is co-rolled with the layer (3A,3B) of metallic mesh material. It should be noted that in this embodiment, the metallic mesh layer is preferably embedded in a polymer and the metallic mesh material thus embedded is then coupled to a supporting cloth (preferably a polymeric fabric).

The embodiment just described is illustrated in Figure 7.

The protective element 1 thus obtained is highly flexible and, at the same time, guarantees the mechanical strength needed for its intended uses.

Moreover, the protective element 1 is easy to make and at limited costs. According to this aspect, the protective element 1 may comprise a plurality of polymeric and metallic fabrics.

With reference to the metallic layer, that is, the metallic fabric, and the layer of polymeric material, it should be noted that each layer is preferably less than 0.5 mm thick.

In a further embodiment, the metallic mesh layer (3A, 3B), that is, the metallic fabric, is coupled to the at least one layer of polymeric material (2A, 2B) by gluing.

Also defined according to the invention is a method for protecting a work zone, and in particular a work zone of a machine tool.

The method comprises the following steps:
- providing a protective element 1 extending mainly in one plane and comprising:
   - at least one layer (2A, 2B) of polymeric material extending in one plane,
   - at least one metallic mesh layer (3A, 3B), that is, a metallic fabric, embedded in (coupled to) the layer of polymeric material (2A, 2B) and extending in one plane to form a mechanical protective barrier, the protective element 1 being flexible;
- providing at least one supporting cloth 4A;
- coupling the at least one supporting cloth 4A to the layer (2A) of polymeric material;
- applying the protective element 1 at the work zone.

Preferably, the layer of polymeric material (2A, 2B) defines a barrier which is impermeable to fluids.

## Claims

1. Machine having a machine tool and aA protective device associated to the machine tool, the protecting device being **characterized in that** it comprises a flexible protective element (1) extending mainly in one plane and comprising:
- at least one layer (2A, 2B) of polymeric material extending in one plane;
- at least one metallic fabric (3A, 3B) extending in one plane and embedded in the layer of polymeric material to form a mechanical protective barrier;
- at least one supporting cloth (4A) coupled to the layer (2A) of polymeric material.

2. **The machine** according to the preceding claim, wherein the at least one supporting cloth (4A) is embedded in the layer (2A) of polymeric material.

3. The **machine** according to the preceding claim, wherein the at least one supporting cloth (4A) is made of polymeric material.

4. The **machine** according to the preceding claim, wherein the at least one supporting cloth (4A) is made of one or more of the following polymers: polyester, polyamide, kevlar.

5. The **machine** according to the preceding claim, wherein the protective element (1) is configured to define a rolling cloth.

6. The **machine** according to any of the preceding claims, comprising a plurality of **metallic fabrics** (3A, 3B) superposed along the thickness of the protective element (1) and embedded in the layer (2A, 2B) of polymeric material.

7. The **machine** according to any of the preceding claims, wherein the at least one layer of polymeric material (2A, 2B) comprises a thermoplastic material.

8. The **machine** according to any of the claims from 1 to 7, wherein the at least one layer of polymeric material (2A, 2B) comprises a thermosetting material.

9. The **machine** according to any of the preceding claims, wherein the at least one layer of polymeric material (2A, 2B) is configured to be transparent.

10. The **machine** according to any of the preceding claims, wherein the layer of polymeric material (2A, 2B) comprises one or more of the following compounds: polyurethane, silicone, PTFE ETFE, polyethylene, polyester, neoprene, polychloroprene, natural rubber, nitrile rubber, PVDC, PVDF, aramid fibre, polyamide.

11. The **machine** according to any of the preceding claims, further comprising a roller (20), and wherein the protective element (1) is operatively coupled to the roller to be wound onto, and unwound from, the roller (20) between two limit configurations, namely a fully wound and a fully unwound configuration.

12. The **machine** according to any of the claims from 1 to 11, wherein the protective element (1) is provided with fold lines (22) in such a way as to form a bellows (21) adjustable between two limit configurations, namely a fully closed configuration and a fully extended configuration of the bellows (21).

13. The **machine** according to any of the preceding claims, comprising at least one guide configured to allow the protective element (1) to slide along the guide.

14. A method for protecting a work zone, comprising the steps of:
- providing a flexible protective element (1) extending mainly in one plane and comprising:
- at least one layer (2A, 2B) of polymeric material extending mainly in one plane,
- at least one metallic fabric (3A, 3B) extending mainly in one plane;
- embedding the at least one metallic fabric (3A, 3B) in the layer (2A, 2B) of polymeric material to form a mechanical protective barrier;
- providing at least one supporting cloth (4A);
- coupling the at least one supporting cloth (4A) to the layer (2A) of polymeric material;
- applying the protective element (1) at the work zone.

15. The method according to the preceding claim, wherein the step of coupling the at least one supporting cloth (4A) to the layer (2A) comprises a step of embedding the at least one supporting cloth (4A) in the layer (2A) of polymeric material.

## Patentansprüche

1. Maschine, aufweisend ein Maschinenwerkzeug und eine Schutzeinrichtung, verbunden mit dem Maschinenwerkzeug, wobei die Schutzeinrichtung **dadurch gekennzeichnet ist, dass** sie ein flexibles Schutzelement (1) umfasst, das sich hauptsächlich auf einer Ebene erstreckt, und umfassend:
- mindestens eine Schicht (2A, 2B) Polymermaterial, die sich auf einer Ebene erstreckt;
- mindestens ein Metallgewebe (3A, 3B), das sich auf einer Ebene erstreckt und in die Schicht Polymermaterial eingebettet ist, um eine mechanische Schutzbarriere zu formen;
- mindestens ein Stütztuch (4A), gekoppelt mit der Schicht (2A) Polymermaterial.

2. Maschine nach dem vorhergehenden Anspruch, wobei das mindestens eine Stütztuch (4A) in die Schicht (2A) Polymermaterial eingebettet ist.

3. Maschine nach dem vorhergehenden Anspruch, wobei das mindestens eine Stütztuch (4A) aus Polymermaterial besteht.

4. Maschine nach dem vorhergehenden Anspruch, wobei das mindestens eine Stütztuch (4A) aus einem oder mehreren der folgenden Polymere besteht: Polyester, Polyamid, Kevlar.

5. Maschine nach dem vorhergehenden Anspruch, wobei das Schutzelement (1) ausgelegt ist, um ein Rolltuch zu definieren.

6. Maschine nach einem der vorhergehenden Ansprüche, umfassend eine Vielzahl von Metallgeweben (3A, 3B), die entlang der Dicke des Schutzelements (1) übereinander angeordnet und in die Schicht (2A, 2B) Polymermaterial eingebettet sind.

7. Maschine nach einem der vorhergehenden Ansprüche, wobei die mindestens eine Schicht Polymermaterial (2A, 2B) ein Thermoplastmaterial umfasst.

8. Maschine nach einem der Ansprüche 1 bis 7, wobei die mindestens eine Schicht Polymermaterial (2A, 2B) ein Duroplastmaterial umfasst.

9. Maschine nach einem der vorhergehenden Ansprüche, wobei die mindestens eine Schicht Polymermaterial (2A, 2B) ausgelegt ist, um transparent zu sein.

10. Maschine nach einem der vorhergehenden Ansprüche, wobei die Schicht Polymermaterial (2A, 2B) eine oder mehrere der folgenden Verbindungen umfasst: Polyurethan, Silikon, PTFE EFTE, Polyethylen, Polyester, Neopren, Polychloropren, Naturkautschuk, Nitrilkautschuk, PVDC, PVDF, Aramidfaser, Polyamid.

11. Maschine nach einem der vorhergehenden Ansprüche, zudem umfassend eine Rolle (20), und wobei das Schutzelement (1) betriebswirksam mit der Rolle gekoppelt ist, um auf die Rolle (20) aufgerollt und von dieser abgerollt zu werden, und zwar zwischen zwei Grenzkonfigurationen, nämlich einer vollständig aufgerollten und einer vollständig abgerollten Konfiguration.

12. Maschine nach einem der Ansprüche 1 bis 11, wobei das Schutzelement (1) mit zwei Faltlinien (22) versehen ist, sodass ein Balg (21) geformt wird, verstellbar zwischen zwei Grenzkonfigurationen, nämlich einer völlig geschlossenen Konfiguration und einer völlig ausgezogenen Konfiguration des Balgs (21).

13. Maschine nach einem der vorhergehenden Ansprüche, umfassend mindestens eine Führung, die ausgelegt ist, um dem Schutzelement (1) zu ermöglichen, entlang der Führung zu gleiten.

14. Verfahren zum Schutz eines Arbeitsbereichs, umfassend folgende Schritte:
Bereitstellen eines flexiblen Schutzelements (1), das sich hauptsächlich in einer Ebene erstreckt und umfasst:
- mindestens eine Schicht (2A, 2B) Polymermaterial, die sich hauptsächlich auf einer Ebene erstreckt;
- mindestens ein Metallgewebe (3A, 3B), das sich hauptsächlich auf einer Ebene erstreckt;
- Einbetten des mindestens einen Metallgewebes (3A, 3B) in die Schicht (2A, 2B) Polymermaterial, um eine mechanische Schutzbarriere zu formen;
- Bereitstellen mindestens eines Stütztuchs (4A);
- Koppeln des mindestens einen Stütztuchs (4A) mit der Schicht (2A) Polymermaterial;
- Anbringen des Schutzelements (1) am Arbeitsbereich.

15. Verfahren nach dem vorhergehenden Anspruch, wobei der Schritt zum Koppeln des mindestens einen Stütztuchs (4A) mit der Schicht (2A) einen Schritt zum Einbetten des mindestens einen Stütztuchs (4A) in die Schicht (2A) Polymermaterial umfasst.

## Revendications

1. Machine ayant une machine-outil et un dispositif de protection associé à la machine-outil, le dispositif de protection étant **caractérisé en ce qu'**il comprend un élément de protection flexible (1) se développant principalement dans un plan et comprenant :
- au moins une couche (2A, 2B) de matériau polymérique se développant dans un plan ;
- au moins un tissu métallique (3A, 3B) se développant dans un plan et incorporé dans la couche de matériau polymérique pour former une barrière de protection mécanique ;
- au moins une toile de support (4A) accouplée à la couche (2A) de matériau polymérique.

2. Machine selon la revendication précédente, dans laquelle l'au moins une toile de support (4A) est incorporée dans la couche (2A) de matériau polymérique.

3. Machine selon la revendication précédente, dans laquelle l'au moins une toile de support (4A) est composée d'un matériau polymérique.

4. Machine selon la revendication précédente, dans laquelle l'au moins une toile de support (4A) est composée d'un ou plusieurs des polymères suivants : polyester, polyamide, kevlar

5. Machine selon la revendication précédente, dans laquelle l'élément de protection (1) est configuré pour définir une toile enroulée.

6. Machine selon l'une quelconque des revendications précédentes, comprenant une pluralité de tissus métalliques (3A, 3B) superposés le long de l'épaisseur de l'élément de protection (1) et incorporés dans la couche (2A, 2B) de matériau polymérique.

7. Machine selon l'une quelconque des revendications précédentes, dans laquelle l'au moins une couche de matériau polymérique (2A, 2B) comprend un matériau thermoplastique.

8. Machine selon l'une quelconque des revendications de 1 à 7, dans laquelle l'au moins une couche de matériau polymérique (2A, 2B) comprend un matériau thermodurcissable.

9. Machine selon l'une quelconque des revendications précédentes, dans laquelle l'au moins une couche de matériau polymérique (2A, 2B) est configurée pour être transparente.

10. Machine selon l'une quelconque des revendications précédentes, dans laquelle la couche de matériau kevlar (2A, 2B) comprend un ou plusieurs des composants suivants : polyuréthane, silicone, PTFE ETFE, polyéthylène, polyester, néoprène, polychloroprène, caoutchouc naturel, caoutchouc nitrile, PVDC, PVDF, fibre aramide, polyamide.

11. Machine selon l'une quelconque des revendications précédentes, comprenant de plus un rouleau (20), et dans laquelle l'élément de protection (1) est fonctionnellement accouplé au rouleau pour être enroulé sur le, et déroulé du rouleau (20) entre deux configurations extrêmes, respectivement une configuration d'enroulement et de déroulement complet.

12. Machine selon l'une quelconque des revendications de 1 à 11, dans laquelle l'élément de protection (1) est pourvu de lignes de pliage (22) de manière à former un soufflet (21) réglable entre deux configurations extrêmes, respectivement une configuration de fermeture complète et une configuration d'extension complète du soufflet (21).

13. Machine selon l'une quelconque des revendications précédentes, comprenant au moins un guide configuré pour permettre à l'élément de protection (1) de coulisser le long du guide.

14. Procédé servant à protéger une zone de travail, comprenant les étapes de :
- prévoir un élément de protection flexible (1) se développant principalement dans un plan et comprenant :
- au moins une couche (2A, 2B) de matériau polymérique se développant principalement dans un plan,
- au moins un tissu métallique (3A, 3B) se développant principalement dans un plan ;
- incorporer l'au moins un tissu métallique (3A, 3B) dans la couche (2A, 2B) de matériau polymérique pour former une barrière protectrice mécanique ;
- prévoir l'au moins une toile de support (4A) ;
- accoupler l'au moins une toile de support (4A) à la couche (2A) de matériau polymérique ;
- appliquer l'élément de protection (1) au niveau de la zone de travail.

15. Procédé selon la revendication précédente, dans lequel l'étape consistant à accoupler l'au moins une toile de support (4A) à ladite couche (2A) comprend une étape consistant à incorporer l'au moins une toile de support (4A) dans la couche (2A) de matériau polymérique.
